# EUROPÄISCHE PATENTSCHRIFT

(11) **EP 0 571 738 B1**
(45) Veröffentlichungstag und Bekanntmachung des Hinweises auf die Patenterteilung: **10.03.1999**
(21) Anmeldenummer: 93104910.0
(22) Anmeldetag: 25.03.1993
(51) Int. Cl.: B29C 33/50

(54) **Vorrichtung zum Herstellen von Profilen aus Duromeren**
Apparatus for manufacturing thermosetting profiles
Dispositif pour la fabrication de profilés thermodurcissables

(30) Priorität: 26.05.1992 US 887809
(43) Veröffentlichungstag der Anmeldung: 01.12.1993
(73) Patentinhaber: Paulsen, Hans-Dieter, 64673 Zwingenberg (DE)
(72) Erfinder: Paulsen, Hans-Dieter, 64673 Zwingenberg (DE)
(74) Vertreter: Meissner, Peter E., Dipl.-Ing.

(56) Entgegenhaltungen:
- DE-A- 3 530 831
- DE-A- 3 535 625
- FR-A- 2 311 643
- GB-A- 2 229 667

## Beschreibung

Die Erfindung bezieht sich auf eine Vorrichtung zum Herstellen von Profilen, z.B. Rahmenprofilen für Fenster, Türen od. dgl. aus einem Duromeren, z.B. Polyurethan-Integral-Hartschaum, mit einer aus Unterform und Oberform bestehenden, die Kontur des Profils bestimmenden Form, welche in Schließstellung einen Forminnenraum für die Aufnahme der flüssigen Rohstoffkomponenten begrenzen und in Öffnungsstellung die Entformbarkeit des ausgehärteten Profils gestatten, wobei sowohl die Unterform als auch die Oberform im Querschnitt aufgrund einer Bodenwandung und jeweils zwei davon abstehenden in Formlängsrichtung gesehen im wesentlichen parallel verlaufenden Seitenschenkeln im wesentlichen U-förmig ausgebildet sind und die Oberform mit ihren beiden Seitenschenkeln die Unterform an ihren beiden Seitenschenkeln formschlüssig übergreift. Vorrichtungen dieser Art sind allgemein bekannt.

Bei der Herstellung von Profilen aus Duromeren orientiert sich die Länge der Formen entweder an Nutzlängen oder aber es werden Universallängen, meist in einer Abmessung von 6 m, hergestellt. Die Oberform und Unterform sind jeweils auf Formträgern montiert, welche während des Produktionsprozesses durch mechanische Vorrichtungen und/oder hydraulische Antriebe in Schließstellung überführt werden. Zur Verbesserung der Entformung der Profile sind die Formen mit einer Aushebeschräge versehen. Aufgrund dessen sind die Profile in ihrem Querschnitt nicht genau rechtwinklig, was an sich angestrebt wird. Handelt es sich bei den Profilen bspw. um Fensterprofile, so werden diese zur Weiterverarbeitung auf Doppelgehrungssägen geschnitten und mit Hilfe von Eckverbindern und Klebern zu Rahmen zusammengefügt. Hierbei sind die Aushebeschrägen nicht störend. Benötigt man jedoch Stoß- oder T-Verbindungen, führen die Aushebeschrägen zu unschönem Versatz an den Außenseiten der Verbindungsstellen. Dieser Versatz tritt nur dann nicht auf, wenn die Profilaußenseiten parallel, also ohne Aushebeschrägen, und wenn die Profilstärken identisch sind. In der Praxis sind jedoch auch die Profilstärken nicht zwangsläufig identisch, denn als Formen werden bspw. stranggepreßte Aluminiumprofile verwendet, welche immer bedeutende Preßtoleranzen enthalten. Eine weitere Quelle für Ungenauigkeiten und Toleranzen bei geschäumten Profilen ist die unterschiedliche Druckverteilung innerhalb der geschlossenen Form während des Produktionsprozesses. Die Form ist beim Befüllen mit den flüssigen Rohstoffkomponenten nämlich schräggestellt, die Materialzuführung erfolgt von unten und die Entlüftung des Forminnenraums am oberen Ende der Form. Es kommt dadurch innerhalb der Form zu unterschiedlichen Drücken, welche im Angußbereich zu einer Aufblähung der Form und damit zu ungenauen Profilen führen können.

Aufgabe der Erfindung ist es, eine Vorrichtung der eingangs genannten Art vorzuschlagen, mit Hilfe welcher Profile mit parallelen Außenflächen herstellbar sind, gleichzeitig aber leichte Entformbarkeit gewährleistet ist.

Diese Aufgabe wird mit der Erfindung im wesentlichen dadurch gelöst, daß wenigstens der eine Seitenschenkel der Unterform bei geöffneter Form unter Bildung einer Aushebeschräge schräg nach außen steht und beim Schließen der Form derart nach innen schwenkbar ist, daß seine Innenwandfläche in Richtung der Formhöhe parallel zu der Innenwandfläche des gegenüberliegenden Seitenschenkels steht. Unterform ist (unabhängig von der Lage) derjenige Formteil, dessen Seitenschenkel die Seitenflächen des Profils bestimmen, während die untere Fläche und die obere Fläche des Profils von den Bodenwandungen der Unterform und der Oberform bestimmt werden.

Die erfindungsgemäße Form zeichnet sich also dadurch aus, daß nicht beide Seitenschenkel in sich biegesteif und auch biegesteif mit der Bodenwandung der Unterform verbunden sind. Vielmehr ist wenigstens einer der Seitenschenkel zwar in sich biegesteif, aber über die Länge der Unterform schwenkbar mit der Bodenwandung der Unterform verbunden. So ist es möglich, daß der schwenkbare Seitenschenkel bei geschlossener Form parallel zu dem gegenüberliegenden Seitenschenkel steht, während er bei geöffneter Form unter Bildung der gewünschten Aushebeschräge leicht nach außen geneigt ist.

Bei einer bevorzugten Ausgestaltung der Erfindung ist nur einer der beiden Seitenschenkel der Unterform schwenkbar, der andere jedoch biegesteif an der Bodenwandung gehalten. Für die Entformbarkeit ist lediglich die Schwenkbarkeit eines einzelnen Seitenschenkels erforderlich.

Der wenigstens eine schwenkbare Seitenschenkel ist dabei vorzugsweise einstückig mit der Bodenwandung der Unterform ausgebildet und im Bereich des Übergangs des schwenkbaren Seitenschenkels in die Bodenwandung der Unterform ist ein Materialschwächungsbereich vorgesehen, welcher die Schwenkbarkeit derart gewährleistet, daß der in sich bis zur Bodenwandung biegesteife Seitenschenkel seitlich verschwenkbar ist. Auf diese Weise wird die Ebenheit und Parallelität der Außenseitenflächen des Profiles gewährleistet. Die Beweglichkeit des einen Seitenschenkels der Unterform bedingt durch die Materialschwächung im Gelenkteil des Seitenschenkels und nicht durch einen separaten, in einer Nahtstelle verbundenen separaten Seitenschenkel, was im Rahmen der Erfindung auch möglich ist, bringt den weiteren Vorteil mit sich, daß eine solche Nahtstelle vermieden ist. Nahtstellen an Formen, in welchen niedrig viskose flüssige Kunststoffe verarbeitet werden, können unterwandert und auf Dauer aufgekeilt werden, so daß Ungenauigkeiten auftreten.

In weiterer Ausgestaltung der Erfindung ist der wenigstens eine schwenkbare Seitenschenkei beim Schließen der Form durch Zusammenwirken mit einem ihm zugeordneten, als Anpreßschenkel ausgebildeten Seitenschenkel der Oberform aus der anfänglichen Schrägstellung in die Parallelstellung bei geschlossener Form überführbar. Auf diese Weise gelangt der schwenkbare Seitenschenkel der Unterform jeweils beim Schließen der Form zwangsläufig in die gewünschte Parallelstellung. Etwaige Betätigungselemente, wie hydraulische Zylinder, die im Rahmen der Erfindung für das entsprechende Verschwenken des einen Seitenschenkels eingesetzt werden könnten, sind dadurch entbehrlich.

Gleichermaßen wird das Arbeiten mit der erfindungsgemäßen Vorrichtung dann weiter erleichtert, wenn der wenigstens eine schwenkbare Seitenschenkel der Unterform beim Öffnen der Form selbsttätig unter Bildung der Aushebeschräge in seine Schrägstellung zurückfedert. Dies kann durch entsprechende Ausbildung des Materialschwächungsbereiches am Fuße des schwenkbaren Seitenschenkels erreicht werden.

Das Schließen der Form und das gleichzeitige Überführen des schwenkbaren Seitenschenkels aus der anfänglichen Schrägstellung in die Parallelstellung bei geschlossener Form wird dann erleichtert, wenn die Endbereiche der Seitenschenkel von Unterform und Oberform mit einander zugeordneten Auflaufschrägen zusammenwirken. Beim Schließen der Form wird dadurch der schwenkbare Seitenschenkel allmählich in die endgültige Parallelstellung überführt.

Nach einem weiteren Erfindungsmerkmal ist wenigstens der als Anpreßschenkel ausgebildete Seitenschenkel der Oberform, z.B. mittels Justierschrauben und vorzugsweise über die gesamte Formlänge, in Formguerrichtung einstellbar. Dies hat mehrere Vorteile: Die Parallelität der Außenflächen des zu bildenden Profils ist über die Länge der Form genau einstellbar. Unterschiedliche Forminnendrücke, welche durch Formaufblähung zu unterschiedlichen Profilstärken führen würden, können zuverlässig ausgeglichen werden, so daß Profiltoleranzen zwischen der Angußseite mit hohem Druck und der Entlüftungsseite mit niedrigerem Druck zuverlässig beseitigt werden können. Ferner können auch die bei der Herstellung stranggepreßter Formprofile unvermeidlichen Toleranzen ausgeglichen werden, so daß sich diese nicht auf die Endprodukte übertragen.

Bei einer weiteren vorteilhaften Ausgestaltung der Erfindung weist der als Anpreßschenkel ausgebildete Seitenschenkel der Oberform vorzugsweise seines Übergangs in die Bodenwandung der Oberform einen Materialschwächungsbereich auf. Dadurch kann der Anpreßschenkel, obwohl einstückig mit der Bodenwandung der Oberform ausgebildet, zuverlässig über seine gesamte Länge justiert werden.

Die Genauigkeit der Justierung kann insbesondere dadurch gewährleistet werden, daß sich die Justiermittel, insbesondere die Jusiterschrauben, an oder in einem biegesteifen, vorzugsweise über die gesamte Länge der Oberform verlaufenden Widerlageschenkel der Oberform abstützen. Hierdurch ist es auf einfache Weise möglich, den als Anpreßschenkel ausgebildeten Seitenschenkel der Oberform über die gesamte Länge der Form zum Ausgleich unterschiedlicher Toleranzen unterschiedlich zu justieren, wodurch eine hohe Herstellungsgenauigkeit für die Profile erreichbar ist.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der Erfindung auch unabhängig von ihrer Zusammenfassung in den Ansprüchen oder deren Rückbeziehung.

Es zeigen:
- Fig. 1: schematisch im Querschnitt eine die Erfindung aufweisende Form, bestehend aus Unterform und Oberform, in Schließstellung und
- Fig. 2: eine der Schnittdarstellung von Fig. 1 entsprechenden Schnittdarstellung einer erfindungsgemäßen Unterform, wobei die Schwenkbarkeit des einen Seitenschenkels veranschaulicht ist.

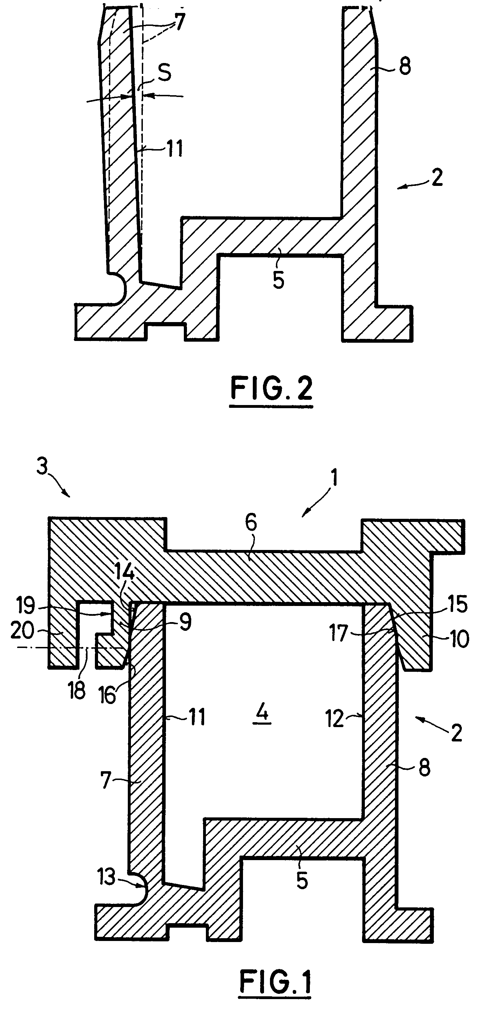

Die erfindungsgemäße Vorrichtung zum Herstellen von Profilen aus einem Duromeren weist eine Form 1, bestehend aus Unterform 2 und Oberform 3, auf. Unterform 2 und Oberform 3 begrenzen in der in Fig. 1 dargestellten Schließstellung einen Forminnenraum 4 für die Aufnahme der flüssigen Rohstoffkomponenten, wodurch die Kontur des Profils bestimmt wird. Unterform 2 und Oberform 3 sind im Querschnitt im wesentlichen U-förmig ausgebildet, indem sie jeweils aus einer Bodenwandung 5, 6 und jeweils zwei im Abstand voneinander angeordneten in Formlängsrichtung gesehen im wesentlichen parallel verlaufenden Seitenschenkeln 7, 8 bzw. 9, 10 bestehen. Der Seitenschenkel 7 der Unterform 2 ist in sich zwar biegesteif, geht aber mittels eines Materialschwächungsbereiches 13 in die Bodenwandung 5 der Unterform 2 über. Auf diese Weise ist der Schenkel 7, wie in Fig. 2 gestrichelt veranschaulicht, relativ zu der Bodenwandung 5 quer zur Formlängsrichtung gesehen verschwenkbar. In der in Fig. 2 in ausgezogenen Linien veranschaulichten Öffnungsstellung des Seitenschenkels 7 bildet der Seitenschenkel 7 mit seiner Innenwandfläche 11 eine Aushebeschräge S, welcher die Entformbarkeit des fertigen Profils gewährleistet. Der andere Seitenschenkel 8 der Unterform 2 ist in sich biegesteif und einstückig biegesteif mit der Bodenwandung 5 verbunden.

Wie aus Fig. 1 ersichtlich, übergreift die Oberform 3 beim Schließen der Form 1 die beiden Seitenschenkel 7 und 8 der Unterform 2, indem einander zugeordnete Auflaufschrägen 14, 16 bzw. 15, 17 in den Endbereichen der Seitenschenkel 7, 8 bzw. 9, 10 zusammenwirken. Während sich die beiden Schenkel 8 und 10 dabei ohne Verformung formschlüssig aneinanderlegen, wird der Seitenschenkel 7 der Unterform 2 aufgrund des Materialschwächungsbereiches 13 durch Einwirken des Seitenschenkels 9 der Oberform 3 so weit nach innen geschwenkt, bis die Innenwandfläche 11 in Höhenrichtung der Form 1 gesehen genau parallel zu der Innenwandfläche 12 des gegenüberliegenden Seitenschenkels 8 liegt. Wenn nun der Forminnenraum 4 ausgeschäumt wird, entsteht ein Profil, welches genau parallele Seitenflächen erhält.

Wird die Form 1 wieder geöffnet, kann der Seitenschenkel 7 aufgrund des Materialschwächungsbereiches 13 selbsttätig wieder nach außen schwenken und die in Fig. 2 veranschaulichte Aushebeschräge S bilden.

Parallel zu dem als Anpreßschenkel ausgebildeten Seitenschenkel 9 der Oberform 3 verläuft am Außenrand über die Länge der Form 1 ferner ein Widerlagerschenkel 20. An dem Widerlagerschenkel 20 sind, vorzugsweise über die Länge der Form 1 verteilt, Justiermittel in Form von Justierschrauben 18 vorgesehen, mit Hilfe welcher der Seitenschenkel 9 mehr oder weniger nach innen verstellbar ist. Während also der Widerlagerschenkel 20 in sich biegesteif und auch biegesteif mit der Bodenwandung 6 der Oberform 3 verbunden ist, weist der Seitenschenkel 9 einen Materialschwächungsbereich 19 auf, welcher die Justierbarkeit zum Ausgleich von Toleranzen gewährleistet. Dadurch, daß sich die Justiermittel 18 an dem biegesteifen Widerlagerschenkel 20 abstützen, ist die Einheit aus den beiden Schenkeln 9 und 20 beim Schließen der Form 1 insgesamt jedoch biegesteif, so daß beim Schließen der Form 1 der Seitenschenkel 7 der Unterform 2 zuverlässig in die gewünschte Parallelstellung überführt wird.

### Bezugszeichenliste:

- 1: Form
- 2: Unterform
- 3: Oberform
- 4: Forminnenraum
- 5: Bodenwandung
- 6: Bodenwandung
- 7: Seitenschenkel (schwenkbar)
- 8: Seitenschenkel (biegesteif)
- 9: Seitenschenkel (Anpreßschenkel, justierbar)
- 10: Seitenschenkel (feststehend)
- 11: Innenwandfläche
- 12: Innenwandfläche
- 13: Schwächungsbereich
- 14: Auflaufschräge
- 15: Auflaufschräge
- 16: Auflaufschräge
- 17: Auflaufschräge
- 18: Justierschrauben
- 19: Schwächungsbereich
- 20: Widerlagerschenkel
- S: Aushebeschräge

## Patentansprüche

1. Vorrichtung zum Herstellen von Profilen, z.B. Rahmenprofilen für Fenster, Türen od. dgl. aus einem Duromeren, z.B. Polyurethan-Integral-Hartschaum, mit einer aus Unterform (2) und Oberform (3) bestehenden, die Kontur des Profils bestimmenden Form (1), welche in Schließstellung einen Forminnenraum (4) für die Aufnahme der flüssigen Rohstoffkomponenten begrenzen und in Öffnungsstellung die Entformbarkeit des ausgehärteten Profils gestatten, wobei sowohl die Unterform (2) als auch die Oberform (3) im Querschnitt aufgrund einer Bodenwandung (5; 6) und jeweils zwei davon abstehenden in Formlängsrichtung gesehen im wesentlichen parallel verlaufenden Seitenschenkeln (7, 8; 9, 10) im wesentlichen U-förmig ausgebildet sind und die Oberform (3) mit ihren beiden Seitenschenkeln (9, 10) die Unterform (2) an ihren beiden Seitenschenkeln (7, 8) formflüssig übergreift, dadurch gekennzeichnet, daß wenigstens der eine Seitenschenkel (7) der Unterform (2) bei geöffneter Form (1) unter Bildung einer Aushebeschräge (S) schräg nach außen steht und beim Schließen der Form (1) derart nach innen schwenkbar ist, daß seine Innenwandfläche (11) in Richtung der Formhöhe gesehen parallel zu der Innenwandfläche (12) des gegenüberliegenden Seitenschenkels (8) steht.

2. Vorrichtung nach Anspruch 1, dadurch gekennzeichnet, daß nur einer der beiden Seitenschenkel (7) der Unterform (2) schwenkbar, der andere jedoch biegesteif an der Bodenwandung (5) gehalten ist.

3. Vorrichtung nach Anspruch 1 oder 2, dadurch gekennzeichnet, daß der mindestens eine schwenkbare Seitenschenkel (7) einstückig mit der Bodenwandung (5) der Unterform (2) ausgebildet und daß im Bereich des Übergangs des schwenkbaren Seitenschenkels (7) in die Bodenwandung (5) der Unterform (2) ein Schwächungsbereich (13) vorgesehen ist.

4. Vorrichtung nach einem der Ansprüche 1 bis 3, dadurch gekennzeichnet, daß der wenigstens eine schwenkbare Seitenschenkel (7) der Unterform (2) beim Schließen der Form (1) durch Zusammenwirken mit einem ihm zugeordneten, als Anpreßschenkel ausgebildeten Seitenschenkel (9) der Oberform (3) aus der anfänglichen Schrägstellung in eine Parallelstellung bei geschlossener Form (1) überführbar ist.

5. Vorrichtung nach einem der Ansprüche 1 bis 4, dadurch gekennzeichnet, daß der wenigstens eine schwenkbare Seitenschenkel (7) der Unterform (2) beim Öffnen der Form (1) selbsttätig unter Bildung der Aushebeschräge (S) in seine Schrägstellung zurückfedert.

6. Vorrichtung nach einem der Ansprüche 1 bis 5, dadurch gekennzeichnet, daß die Endbereiche der Seitenschenkel (7, 8; 9, 10) von Unterform (2) und Oberform (3) mit einander zugeordneten Auflaufschrägen (14, 15; 16, 17) zusammenwirken.

7. Vorrichtung nach einem der Ansprüche 1 bis 6, dadurch gekennzeichnet, daß wenigstens der als Anpreßschenkel ausgebildete Seitenschenkel (9) der Oberform (3) , z.B. mittels Justierschrauben (18), in Formquerrichtung gesehen einstellbar ist.

8. Vorrichtung nach einem der Ansprüche 1 bis 7, dadurch gekennzeichnet, daß der als Anpreßschenkel ausgebildete Seitenschenkel (9) der Oberform (3) vorzugsweise im Bereich seines Übergangs in die Bodenwandung (6) der Oberform (3) einen Schwächungsbereich (19) aufweist.

9. Vorrichtung nach einem der Ansprüche 1 bis 8, dadurch gekennzeichnet, daß sich die Justiermittel, insbesondere die Justierschrauben (18), an oder in einem biegesteifen Widerlagerschenkel (20) der Oberform (3) abstützen.

## Claims

1. An apparatus for manufacturing profiles, e.g. frame profiles for windows, doors or the like, from a thermoset material, e.g. rigid polyurethane integral foam, having a mould (1) consisting of a lower mould (2) and an upper mould (3) which determines the contour of the profile, which in the closed position define a mould cavity (4) for receiving the liquid raw material components and in the open position permit the demoulding of the cured profile, both the lower mould (2) and the upper mould (3) being substantially U-shaped in cross-section owing to a base wall (5; 6) and two side members (7, 8; 9, 10) in each case projecting therefrom and extending substantially parallel when viewed in the longitudinal direction of the mould and the upper mould (3) with its two side members (9, 10) engaging over the lower mould (2) on its two side members (7, 8) in positive manner, characterised in that at least one side member (7) of the lower mould (2) projects obliquely outwards, forming a removal slope (S) when the mould (1) is opened, and when the mould (1) is closed can be pivoted inwards such that its inner wall surface (11), viewed in the direction of the mould height, lies parallel to the inner wall surface (12) of the opposing side member (8).

2. An apparatus according to Claim 1, characterised in that only one of the two side members (7) of the lower mould (2) is pivotable, but the other is held rigidly on the base wall (5).

3. An apparatus according to Claim 1 or 2, characterised in that the at least one pivotable side member (7) is integral with the base wall (5) of the lower mould (2) and that a region of weakness (13) is provided in the region of the transition of the pivotable side member (7) into the base wall (5) of the lower mould (2).

4. An apparatus according to one of Claims 1 to 3, characterised in that the at least one pivotable side member (7) of the lower mould (2) when closing the mould (1) by cooperation with a side member (9) of the upper mould (3) which is associated therewith and is in the form of a contact-pressure member can be moved from the initial inclined position into a parallel position when the mould (1) is closed.

5. An apparatus according to one of Claims 1 to 4, characterised in that the at least one pivotable side member (7) of the lower mould (2) when the mould (1) is opened springs back into its inclined position automatically, forming the removal slope (S).

6. An apparatus according to one of Claims 1 to 5, characterised in that the end regions of the side members (7, 8; 9, 10) of the lower mould (2) and upper mould (3) cooperate with run-in slopes (14, 15; 16, 17) which are associated with one another.

7. An apparatus according to one of Claims 1 to 6, characterised in that at least the side member (9) of the upper mould (3) which is formed as the contact-pressure member is adjustable in the transverse direction of the mould, e.g. by means of adjusting screws (18).

8. An apparatus according to one of Claims 1 to 7, characterised in that the side member (9) of the upper mould (3) which is formed as a contact-pressure member has an area of weakness (19) preferably in the region of its transition into the base wall (6) of the upper mould (3).

9. An apparatus according to one of Claims 1 to 8, characterised in that the adjusting means, in particular the adjusting screws (18), are supported on or in a rigid abutment member (20) of the upper mould (3).

## Revendications

1. Dispositif pour fabriquer des profilés, par exemple des profilés d'encadrement pour des fenêtres, des portes ou analogues, à partir d'un duromère, par exemple de la mousse rigide intégrale de polyuréthane, comportant un moule (1) déterminant le contour du profilé et constitué d'un moule inférieur (2) et d'un moule supérieur (3), lesquels, dans la position de fermeture, Imitent un espace interne de moule (4) pour la réception des composants liquides des produits de départ et, dans la position ouverte, permettent le démoulage du profilé durci, aussi bien le moule inférieur (2) que le moule supérieur (3), en section transversale, étant réalisés essentiellement en forme de U par une paroi de fond (5;6) et, à chaque fois, deux branches latérales (7,8;9,10) s'étendant généralement parallèlement en s'éloignant de celle-ci dans la direction longitudinale du moule, et le moule supérieur (3) avec ses deux branches latérales (9,10), enjambant, par coopération de formes, le moule inférieur (2) sur ses deux branches latérales (7,8),
caractérisé en ce qu'au moins une branche latérale (7) du moule inférieur (2), lorsque le moule (1) est ouvert, est inclinée vers l'extérieur en formant une inclinaison de démoulage (S), et peut pivoter vers l'intérieur lors de la fermeture du moule (1) de sorte que sa surface de paroi interne (11), en direction de la hauteur du moule, soit parallèle à la surface de paroi interne (12) de la branche latérale opposée (8).

2. Dispositif selon la revendication 1,
caractérisé en ce qu'uniquement une des deux branches latérales (7) du moule inférieur (2) peut pivoter, l'autre étant cependant maintenue rigide en flexion sur la paroi de fond (5).

3. Dispositif selon la revendication 1 ou 2,
caractérisé en ce que la branche latérale pouvant pivoter (7) est réalisée en une pièce avec la paroi de fond (5) du moule inférieur (2), et en ce que, dans la zone de la transition de la branche latérale (7) pouvant pivoter, il est prévu une zone d'affaiblissement (13) dans la paroi de fond (5) du moule inférieur (2).

4. Dispositif selon une des revendications 1 à 3,
caractérisé en ce que la branche latérale pouvant pivoter (7) du moule inférieur (2), lors de la fermeture du moule (1), par coopération avec une branche latérale (9) du moule supérieur (3) réalisée comme branche de pressage et associée à celle-ci, peut passer de la position inclinée initiale à une position parallèle lorsque le moule (1) est fermé.

5. Dispositif selon une des revendications 1 à 4,
caractérisé en ce que la branche latérale pouvant pivoter (7) du moule inférieur (2), lors de l'ouverture du moule (1), retourne automatiquement de facon élastique dans sa position inclinée en formant l'inclinaison de démoulage (S).

6. Dispositif selon une des revendications 1 à 5,
caractérisé en ce que les zones d'extrémité des branches latérales (7,8 ;9,10) du moule inférieur (2) et du moule supérieur (3) coopèrent avec des plans inclinés (14,15 ; 16,17) associés les uns aux autres.

7. Dispositif selon une des revendications 1 à 6,
caractérisé en ce qu'au moins la branche latérale (9), réalisée comme branche de pressage, du moule supérieur (3), peut être réglée en direction transversale du moule, par exemple au moyen de vis d'ajustage (18).

8. Dispositif selon une des revendications 1 à 7,
caractérisé en ce que la branche latérale (9) du moule supérieur (3) réalisée comme branche de pressage présente, avantageusement, dans la zone de sa transition dans la paroi de fond (6) du moule supérieur (3), une zone d'affaiblissement (19).

9. Dispositif selon une des revendications 1 à 8,
caractérisé en ce que les moyens d'ajustage, en particulier les vis d'ajustage (18), s'appuient sur ou dans une branche de butée (20), rigide à la flexion, du moule supérieur (3).
